# EUROPÄISCHE PATENTSCHRIFT

(11) **EP 3 137 365 B1**
(45) Veröffentlichungstag und Bekanntmachung des Hinweises auf die Patenterteilung: **23.10.2019**
(21) Anmeldenummer: 15718163.7
(22) Anmeldetag: 08.04.2015
(51) Int. Cl.: B62D 5/04, F16C 35/077, F16C 27/06

(54) **VORRICHTUNG ZUM AUFBRINGEN EINER HILFSKRAFT IN EINER KRAFTFAHRZEUGLENKUNG**
DEVICE FOR APPLYING AN AUXILIARY FORCE IN A MOTOR VEHICLE STEERING SYSTEM
DISPOSITIF D'APPLICATION D'UNE FORCE AUXILIAIRE DANS UN SYSTÈME DE DIRECTION DE VÉHICULE AUTOMOBILE

(30) Priorität: 28.04.2014 DE 102014105921
(43) Veröffentlichungstag der Anmeldung: 08.03.2017
(73) Patentinhaber: ThyssenKrupp Presta AG, 9492 Eschen (LI); thyssenkrupp AG, 45143 Essen (DE)
(72) Erfinder: STROBEL, Joseph, LI-9493 Mauren (LI); ZOGG, Reto, CH-7208 Malans (CH)
(74) Vertreter: thyssenkrupp Intellectual Property GmbH
(86) Internationale Anmeldenummer: PCT/EP2015/057557
(87) Internationale Veröffentlichungsnummer: WO 2015/165698

(56) Entgegenhaltungen:
- EP-A2- 2 423 075
- WO-A1-99/11502
- DE-A1-102008 001 878
- DE-A1-102008 002 769

## Beschreibung

### Technisches Gebiet

Die vorliegende Erfindung betrifft eine Vorrichtung zum Aufbringen einer Hilfskraft in einer Kraftfahrzeuglenkung, insbesondere eine Hilfskraftunterstützung mit einem Schneckenantrieb.

### Stand der Technik

Lenkwellen für Kraftfahrzeuglenkungen zur Verwendung mit elektrischen oder elektromechanischen Hilfskraftunterstützungen sind prinzipiell bekannt. Die Lenkwellen weisen eine Eingangswelle auf, welche mit dem Lenkrad verbunden ist, über welches der Fahrer des Kraftfahrzeugs ein Lenkmoment als Lenkbefehl in die Kraftfahrzeuglenkung einbringt. Eine mit der Eingangswelle verbundene Ausgangswelle ist vorgesehen, über welche das Lenkmoment über Spurstangen an die jeweils zu lenkenden Räder übertragen wird. Um die jeweils benötigte Unterstützungskraft einer an die Ausgangswelle angebundenen elektrischen oder elektromechanischen Hilfskraftunterstützung bestimmen zu können, sind die Eingangswelle und die Ausgangswelle üblicherweise über einen Drehstab elastisch miteinander verbunden, und über die Bestimmung einer Relativverdrehung zwischen der Eingangswelle und der Ausgangswelle kann das vom Fahrer in die Eingangswelle eingebrachte Drehmoment bestimmt werden.

Hilfskraftunterstützungen, beispielsweise elektrische Hilfskraftunterstützungen oder elektromechanische Hilfskraftunterstützungen, werden zum Eintragen der entsprechenden Hilfsdrehmomente üblicherweise an der Ausgangswelle, am Lenkritzel oder an der Zahnstange angesetzt. Die jeweilige Hilfskraftunterstützung wird dabei über die Bestimmung des vom Fahrer über das Lenkrad in die Eingangswelle eingetragenen Drehmoments bezüglich der Ausgangswelle angesteuert.

In elektromechanischen Hilfskraftunterstützungen für Kraftfahrzeuglenkungen ist es bekannt, die jeweilige Unterstützungskraft mittels eines Elektromotors aufzubringen, wobei die Hilfskraft beispielsweise über eine Antriebsschnecke auf ein Schneckenrad übertragen wird, welches mit dem Lenkstrang gekoppelt ist. Hierzu ist der Elektromotor üblicherweise mit der Antriebsschnecke gekoppelt, entweder durch ein direktes Ansetzen der Antriebsschnecke auf die Abtriebswelle des Elektromotors, oder mittels eines zwischen Elektromotor und Antriebsschnecke geschalteten Getriebes. Die Antriebsschnecke wirkt auf ein Schneckenrad, welches das Drehmoment beispielsweise über ein Getriebe, einen Zahnstangenmechanismus oder einen Riementrieb auf den eigentlichen Lenkstrang überträgt. Hierbei kann die Hilfskraftunterstützung die Unterstützungskraft beispielsweise im Bereich der Lenkwelle, der Lenkwelle, des Lenkritzels oder der Zahnstange eintragen.

Die Antriebsschnecke ist üblicherweise in einem Gehäuse der Vorrichtung mittels eines Wälzlagers gelagert. Um einen Winkelausgleich an der Lagerstelle bereitzustellen, über welchen beispielsweise Montagetoleranzen oder eine Verbiegung der Antriebsschnecke aufgrund der auftretenden Radialkräfte, welche in einer leichten Durchbiegung der Antriebsschnecke resultieren kann, ausgeglichen werden können, sind Ausgleichs- und Anfederungsmechanismen bekannt. Entsprechend kann über den auf diese Weise vorgenommenen Winkelausgleich das Wälzlager so betrieben werden, dass es nur Radialkomponenten abstützen muss, wodurch das Geräuschniveau verringert ist.

Aus der EP 2 423 075 A2 ist eine elektrische Lenkvorrichtung bekannt, bei welcher ein die Antriebsschnecke tragendes Lager mittels eines federnden Ringes zwischen dem Wälzlager und dem Gehäuse der Hilfskraftunterstützung angeordnet ist, wobei der federnde Ring Blattfederelemente aufweist. Entsprechend ist das Lager in alle Richtungen verkippbar und eine definierte Verschwenkachse für den Winkelausgleich wird nicht bereitgestellt.

Die DE 10 2008 001678 A1 zeigt eine Vorrichtung zum Aufbringen einer Hilfskraft in einer Kraftfahrzeuglenkung, bei der die Antriebsschnecke, die auf ein Schneckenrad zum Aufbringen einer Hilfskraft in die Kraftfahrzeuglenkung wirkt, in mindestens einem Lager drehbar um eine Lagerachse gelagert ist. Das Lager ist um eine Verschwenkachse, die durch mindestens ein außerhalb des Lagers angeordnetes Verschwenkelement definiert ist, verschwenkbar. Zur Realisierung der Verschwenkbarkeit sind erste und zweite Platten vorgesehen, welche axiale Vorsprünge aufweisen, zwischen denen das Lager gehalten ist. Diese Anordnung erfordert einen hohen Fertigungs- und Montageaufwand.

Aus der gattungsgemäßen WO 99/11502 A1 ist eine Vorrichtung zum Aufbringen einer Hilfskraft bekannt, bei der ein Lager in einem Gehäuse verschwenkbar gelagert ist. Durch die erforderliche Bearbeitung des Gehäuses zur Ausbildung von Verschwenkelementen sind Fertigung und Montage aufwendig.

Aus der DE 10 2008 001878 A1 und der DE 10 2008 002769 A1 sind Vorrichtungen zum Aufbringen einer Hilfskraft bekannt, bei denen das Lager in Schwenklagerungen im Gehäuse angebracht ist, die aufwendig in Fertigung und Montage sind.

### Darstellung der Erfindung

Ausgehend von dem bekannten Stand der Technik ist es eine Aufgabe der vorliegenden Erfindung, eine Vorrichtung zum Aufbringen einer Hilfskraft in einer Hilfskraftunterstützung für eine Kraftfahrzeuglenkung bereitzustellen, welche ein verbessertes Lagerverhalten aufweist und einen geringeren Fertigungs- und Montageaufwand erfordert.

Diese Aufgabe wird durch eine Vorrichtung mit den Merkmalen des Anspruchs 1 gelöst. Vorteilhafte Weiterbildungen ergeben sich aus den Unteransprüchen.

Entsprechend wird eine Vorrichtung zum Aufbringen einer Hilfskraft in einer Kraftfahrzeuglenkung vorgeschlagen, die eine mit einem Elektromotor verbindbare Antriebsschnecke umfasst, die auf ein Schneckenrad zum Aufbringen einer Hilfskraft in die Kraftfahrzeuglenkung wirkt, wobei die Antriebsschnecke in mindestens einem Lager drehbar um eine Lagerachse gelagert ist. Das Lager ist um eine Verschwenkachse, die durch mindestens ein außerhalb des Lagers angeordnetes Verschwenkelement definiert ist, verschwenkbar. Die durch das mindestens eine Verschwenkelement ausgebildete Verschwenkachse ist im Wesentlichen parallel zu der Rotationsachse des Schneckenrades angeordnet. Bevorzugt ist das Lager als Wälzlager, besonders bevorzugt als Kugellager, ausgebildet, um eine Reibungsreduktion zu erzielen.

Erfindungsgemäß umfasst eine in ein Gehäuse eingesetzte Lagervorrichtung äußere Hülse, wobei das Lager oder das Wälzlager in einer äußeren Hülse aufgenommen ist, welche zwei einander gegenüberliegend angeordnete und sich radial nach innen oder aussen erstreckende Lagernasen zur Ausbildung des Verschwenkelements aufweist. So kann die Verschwenkachse des Lagers oder des Wälzlagers auf einfache aber effektive Weise ausgebildet werden und an die jeweiligen baulichen Erfordernisse in der Kraftfahrzeuglenkung angepasst werden. Entsprechend liegt das Lager oder das Wälzlager, bevorzugt mit seinem Außenring, an den Lagernasen an, derart, dass das Lager sich um die auf diese Weise definierte Verschwenkachse verschwenken kann.

Dadurch, dass die durch das mindestens eine Verschwenkelement definierte Verschwenkachse im Wesentlichen parallel zu der Rotationsachse des Schneckenrades angeordnet ist, kann ein Winkelausgleich bereitgestellt werden, der ein Verklemmen der Antriebsschnecke vermeidet, wenn sich die Antriebsschnecke aufgrund der im Betrieb auftretenden Radialkräfte verformt. Gleichzeitig kann aber ein Schwingen der Antriebsschnecke in einer Ebene senkrecht zu der Verformungsrichtung vermieden werden und entsprechend das Auftreten einer Hysterese verringert oder vermieden werden.

Dadurch, dass das Lager oder das Wälzlager um eine Verschwenkachse verschwenkbar ist, die durch mindestens ein außerhalb des Lagers oder des Wälzlagers angeordnetes Verschwenkelement definiert ist, kann eine definierte Verschwenkbarkeit des Lagers oder des Wälzlagers und damit ein definierter Winkelausgleich erreicht werden. Insbesondere ist es hierdurch möglich, einen Winkelausgleich für die Antriebsschnecke um eine definierte Verschwenkachse herum bereitzustellen, um ein verbessertes Antriebsverhalten und insbesondere ein verbessertes Geräuschverhalten zu erreichen, andererseits werden aber die Freiheitsgrade des Lagers oder des Wälzlagers beim Verschwenken in den anderen Richtungen reduziert, um beispielsweise Hystereseeffekte durch ein Hin- und Herschwingen der Antriebsschnecke beim Lastwechsel zu verringern.

Dadurch, dass das mindestens eine Verschwenkelement außerhalb des Lagers, insbesondere des Wälzlagers angeordnet ist, kann ein Standardwälzlager eingebaut werden, welches keine besonderen Anforderungen an den Einbau stellt, und das Wälzlager selbst kann entsprechend einfach und kostengünstig hergestellt werden.

Weiterhin wird durch die Anordnung der Verschwenkelemente außerhalb des Lagers oder des Wälzlagers erreicht, dass die Montage der Vorrichtung insgesamt vereinfacht wird, da das Lager oder das Wälzlager selbst nicht speziell verschwenkbar eingebaut werden muss, sondern lediglich zwischen den Verschwenkelementen eingesetzt werden muss.

Besonders bevorzugt ist zwischen dem Lager und der aufnehmenden äußeren Hülse ein elastisches Element, insbesondere eine Gummieinbettung vorgesehen, die bevorzugt geringfügige radiale Bewegungen, und bei Bedarf auch axiale Bewegungen, dämpft.

Die Lagernasen sind bevorzugt an der äußeren Hülse angeordnet. Im einfachsten Fall sind an der äußeren Hülse zumindest zwei Lagernasen nach innen ausgerichtet, so dass sich das Lager direkt oder indirekt, beispielsweise über eine elastomere Zwischenschicht, in einem entsprechenden Richtungssinn der axialen Bewegungsrichtung der Antriebsschnecke daran abstützt. Bei der Ausbildung von vier Lagernasen können beide Richtungssinne der axialen Bewegungsrichtung abgestützt werden wobei die Verschwenkung gewährleistet ist. Allerdings müssen alle vier Lagernasen in diesem Fall zueinander parallel ausgerichtet sein und ihre Längsachsen müssen alle die Lagerachse des Lagers oder Wälzlagers schneiden. Alternativ kann die äußere Hülse zwei nach außen gerichtete Lagernasen aufweisen, die in einem die Vorrichtung aufnehmendem Gehäuse drehbar gelagert sind, so dass hier eine Verschwenkachse des Lagers oder des Wälzlagers definiert wird.

Bevorzugt sind zwei Lagernasen an einer der Antriebsschnecke zugewendeten Stirnseite der äußeren Hülse und zwei Lagernasen an einer der Antriebsschnecke abgewandten Stirnseite der äußeren Hülse angeordnet, um eine zuverlässige Halterung des Lagers oder des Wälzlagers in der äußeren Hülse zu erreichen und gleichzeitig eine definierte Ausbildung der Verschwenkachse bereit zu stellen.

Besonders bevorzugt stützen vier in einer Ebene liegende Lagernasen das Lager oder das Wälzlager ab. So kann mechanisch einfach und effektiv eine Halterung des Lagers oder des Wälzlagers bei gleichzeitiger eindeutiger Definition der Verschwenkachse bereitgestellt werden.

In einer Weiterbildung ist zwischen der äußeren Hülse und dem Lager oder dem Wälzlager konzentrisch eine innere Hülse angeordnet, in welche das Lager oder das Wälzlager eingesetzt ist, und welche gegenüber der äußeren Hülse verschwenkbar durch das mindestens eine Verschwenkelement abgestützt ist.

Bevorzugt ist zwischen dem Lager oder dem Wälzlager und der äußeren Hülse oder der Hülse ein Elastomerelement angeordnet oder ein Elastomerelement ist auf das Lager oder das Wälzlager und/oder in die äußere Hülle oder der Hülse vulkanisiert. Durch diese elastische Lage, beispielsweise eine Elastomerhülse, kann eine Dämpfung, insbesondere eine akustische Dämpfung, des Wälzlagers gegenüber der äußeren Hülse oder der Hülse beziehungsweise gegenüber dem Gehäuse ausgebildet werden, gleichzeitig aber die Verschwenkung des Lagers oder des Wälzlagers um die Verschwenkachse herum ermöglicht werden.

In einer weiteren bevorzugten Ausbildung sind sowohl an der in Achsenrichtung der Antriebsschnecke zugewendeten Seite des Gehäuses beziehungsweise der äußeren Hülse Lagernasen ausgebildet, als auch auf der der Antriebsschnecke abgewendeten Seite der äußeren Hülse. Entsprechend wird das Lager oder das Wälzlager zwischen vier Lagernasen gehalten, wobei sich jeweils zwei Lagernasen auf der in axialer Richtung der Antriebsschnecke zugewendeten Ebene und zwei Lagernasen in der der Antriebsschnecke abgewendeten Ebene des Gehäuses angeordnet sind. Die Lagernasen liegen sämtlich in der gleichen Ebene, welche die Achse des Lagers oder des Wälzlagers aufnimmt.

Um eine zuverlässige und reibungsarme Verschwenkung bereit zu stellen, weist die äußere Hülse in Axialrichtung eine Breite auf, welche größer ist, als Breite des Lagers oder des Außenringes des Wälzlagers in Axialrichtung.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung eines Lenksystems eines Kraftfahrzeugs mit einer Hilfskraftunterstützung;
- Figur 2: eine schematische Schnittdarstellung durch eine Vorrichtung zum Aufbringen einer Hilfskraft in einer Kraftfahrzeuglenkung;
- Figur 3: eine schematische perspektivische Darstellung von Teilen eines Schneckenantriebs aus Figur 2;
- Figur 4: eine schematische, auseinandergezogene Darstellung einer Lagervorrichtung für die Antriebsschnecke des Schneckenantriebs;
- Figur 5: eine schematische perspektivische Darstellung der Lagervorrichtung aus Figur 4 in einem zusammengebauten Zustand;
- Figur 6: eine schematische perspektivische Darstellung einer Vorrichtung zum Aufbringen einer Hilfskraft in einem weiteren, nicht beanspruchten, Ausführungsbeispiel
- Figur 7: eine schematische perspektivische Darstellung einer Vorrichtung zum Aufbringen einer Hilfskraft in einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

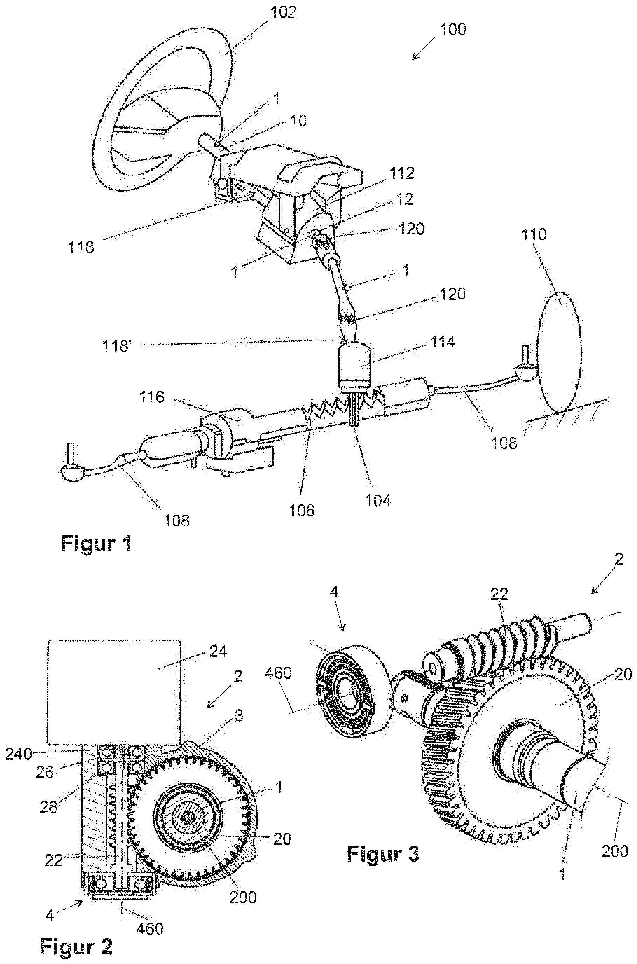

In Figur 1 ist eine schematische Darstellung einer Kraftfahrzeuglenkung 100 gezeigt, wobei ein Fahrer über ein Lenkrad 102 ein entsprechendes Drehmoment als Lenkbefehl in eine Lenkwelle 1 einbringen kann. Das Drehmoment wird dann über die Lenkwelle 1 auf ein Lenkritzel 104 übertragen, welches mit einer Zahnstange 106 kämmt, die dann ihrerseits über entsprechende Spurstangen 108 den vorgegebenen Lenkwinkel auf die lenkbaren Räder 110 des Kraftfahrzeugs überträgt.

Eine elektrische und/oder hydraulische Hilfskraftunterstützung kann in Form der mit der Lenkwelle 1 gekoppelten Hilfskraftunterstützung 112, der mit dem Ritzel 104 gekoppelten Hilfskraftunterstützung 114 und/oder der mit der Zahnstange 106 gekoppelten Hilfskraftunterstützung 116 vorgesehen sein. Die jeweilige Hilfskraftunterstützung 112, 114 oder 116 trägt eine Hilfskraft in die Lenkwelle 1, das Lenkritzel 104 und/oder die Zahnstange 106 ein, wodurch der Fahrer bei der Lenkarbeit unterstützt wird. Die drei unterschiedlichen in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung belegt. Die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten Eingangsdrehmoments bestimmt. Alternativ oder in Kombination mit der Einbringung der Hilfskraft kann mit der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eine mit dem Lenkrad 102 verbundene Eingangswelle 10 und eine mit der Zahnstage 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann beispielsweise über einen Drehwinkelsensor gemessen werden und entsprechend aufgrund der bekannten Torsionssteifigkeit des Drehstabes ein entsprechendes Eingangsdrehmoment relativ zur Ausgangswelle bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise in Form eines Drehschiebeventils, einer elektromagnetischen oder anderen Messung der Relativverdrehung realisiert werden.

Entsprechend wird ein Drehmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 hervorrufen, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder eine einzutragende Hilfskraft bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

In Figur 2 ist eine schematische Schnittdarstellung einer Vorrichtung 2 zum Aufbringen einer Hilfskraft in einer Kraftfahrzeuglenkung gezeigt. Ein Schneckenrad 20 ist vorgesehen, welches mit einer Lenkwelle 1, die schematisch gezeigt ist, verbunden ist. Eine Drehung des Schneckenrades 20 um seine Rotationsachse 200, die hier durch die Lenkwelle 1 ausgebildet ist, bewirkt den Eintrag einer Hilfskraft beziehungsweise einer Zusatzkraft auf die Lenkwelle 1, um entsprechend eine Hilfskraft beziehungsweise einen Zusatzlenkwinkel in den Lenkstrang einzubringen.

Das Schneckenrad 20 wird über eine Antriebsschnecke 22 angetrieben, welche ihrerseits über einen schematisch dargestellten Elektromotor 24 angetrieben ist, wobei der Abtrieb 240 des Elektromotors 24 entsprechend zur Drehmomentübertragung mit der Antriebsschnecke 22 gekoppelt ist.

In der Schnittdarstellung der Figur 2 ist ein Gehäuse 3 der Vorrichtung 2 gezeigt, wobei das Gehäuse 3 ein erstes Wälzlager 26 aufnimmt, welches die Abtriebswelle 240 des Elektromotors 24 radial abstützt. Weiterhin ist ein zweites Radiallager 28 vorgesehen, in welchem das antriebsseitige Ende der Antriebsschnecke 22 radial abgestützt ist.

Das dem Abtrieb 240 des Elektromotors 24 gegenüberliegende Ende der Antriebsschnecke 22 ist in einer Lagervorrichtung 4 gelagert, welche im Nachfolgenden weiter beschrieben werden wird. Die Lagervorrichtung 4 ermöglicht neben der radialen Lagerung der Antriebsschnecke 22 auch einen Winkelausgleich.

In Figur 3 ist eine schematische Darstellung einzelner Komponenten der Vorrichtung 2 gezeigt, wobei hier insbesondere die Lenkwelle 1, das Schneckenrad 20, die Antriebsschnecke 22 und die Lagervorrichtung 4 zur Lagerung des dem antriebsseitigen Ende der Antriebsschnecke 22 gegenüberliegenden Endes gezeigt sind.

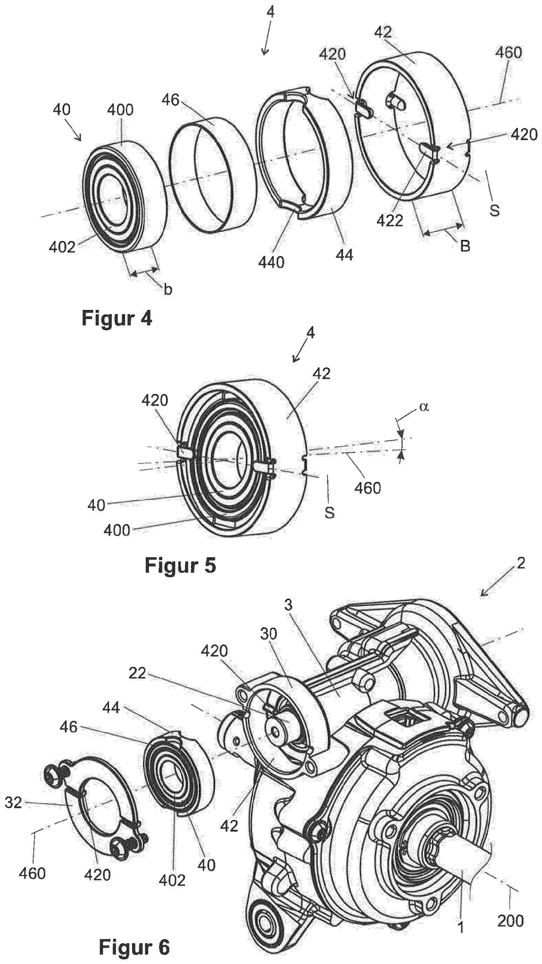

In den Figuren 4 und 5 ist die Lagervorrichtung 4 in unterschiedlichen Darstellungen gezeigt, wobei in Figur 4 einzelne Komponenten der Lagervorrichtung in einer auseinandergezogenen Darstellung gezeigt sind und in Figur 5 die Lagervorrichtung 4 in einem zusammengebauten Zustand gezeigt ist. Die Lagervorrichtung 4 umfasst ein herkömmliches Wälzlager 40, welches einen Außenring 400, einen Innenring 402 und dazwischen in einem Käfig angeordnete Wälzkörper aufweist, welche in der Darstellung nicht gezeigt sind. Bei dem Wälzlager 40 handelt es sich im gezeigten Ausführungsbeispiel um ein herkömmliches Industriewälzlager.

Die Lagervorrichtung 4 umfasst eine äußere Hülse 42, in welche das Wälzlager 40 eingesetzt wird. Die äußere Hülse 42 weist Verschwenkelemente 420 auf, an welchen sich das Wälzlager 40 in axialer Richtung abstützt und welche gleichzeitig auch eine Verschwenkachse S definieren, um welche herum das Wälzlager 40 verschwenkbar ist. In der vorliegenden Ausführungsform sind die Verschwenkelemente 420 in Form von Lagernasen 422 ausgebildet, welche einander radial gegenüberliegend an der äußeren Hülse 42 angeordnet sind und welche sich bezüglich der äußeren Hülse 42 radial nach innen hin erstrecken. Das Wälzlager 40 stützt sich entsprechend mit seinem Außenring 400 an den Lagernasen 422 ab, wobei die Lagernasen 422 außerhalb des Wälzlagers 40 angeordnet sind und nicht in dieses eingreifen. Insbesondere sind die Lagernasen 422 - anders als bei einem herkömmlichen Schwenklager - nicht in ein zu ihnen komplementäre Aufnahme im Außenring 400 des Wälzlagers eingeführt. Das Wälzlager 40 liegt vielmehr lediglich lose an den Lagernasen 422 an und kann im Prinzip frei bewegt werden.

Der Innenring 402 wird im gezeigten Ausführungsbeispiel nicht von den Lagernasen 422 überspannt, so dass die Antriebsschnecke 22 problemlos und ohne an die Lagernasen 422 anzustoßen in dem Wälzlager 40 aufgenommen werden kann.

Die Lagernasen 422 hemmen durch ihre Ausbildung ein in der äußeren Hülse 42 aufgenommenes Wälzlager 40 derart, dass es aus der äußeren Hülse 42 ohne Zerstörung oder Verbiegen der Lagernasen 422 nicht herausgenommen werden kann.

Die Verschwenkelemente 420, die im gezeigten Ausführungsbeispiel durch die Lagernasen 422 ausgebildet sind, definieren eine Verschwenkachse S des Wälzlagers 40. Die Verschwenkachse S kann dabei - so wie in Figuren 4 und 5 angedeutet - direkt durch die Verschwenkelemente 420 hindurch verlaufen. Mit anderen Worten verschwenkt das Wälzlager 40 um eine durch die Lagernasen 422 gebildete Verschwenkachse S herum, so dass die Verschwenkachse S außerhalb des Wälzlagers 40 angeordnet ist.

Wie sich aus Figur 5 ergibt, liegen die Lagernasen 422 am Außenring 400 des Wälzlagers 40 so an, dass sie das Wälzlager 40 in der äußeren Hülse 42 um eine Verschwenkachse S, welche durch die einander gegenüberliegenden Lagernasen 422 ausgebildet ist, herum verschwenkbar halten. Dies ist in Figur 5 beispielsweise darüber zu erkennen, dass die Lagerachse 460 um einen Winkel α verschwenkbar ist. Die Verschwenkachse S liegt entsprechend außerhalb des Wälzlagers 40 und das Wälzlager 40 liegt mit seinem Außenring 400 an den Lagernasen 422 an.

Um überhaupt eine Verschwenkbarkeit des Wälzlagers 40 in der äußeren Hülse 42 trotz der Lagernasen 422 zu erreichen, ist bevorzugt ein geringes Spiel vorgesehen. Besonders ist die Breite B der äußeren Hülse 42 in Axialrichtung größer, als die Breite b des Wälzlagers 40.

Das Wälzlager 40 ist zwischen den Verschwenkelementen 420 nur eingelegt, eine feste Verbindung zu den Strukturen der äußeren Hülle 42 ist in dem gezeigten Ausführungsbeispiel nicht vorgesehen.

In einer Variante kann die Verschwenkachse S auch durch das Wälzlager 40 hindurch gehen und beispielsweise durch die Mitte der axialen Erstreckung des Außenrings 400 zwischen dessen Stirnseiten hindurch treten. Eine solche Ausprägung kann insbesondere dann verwirklicht werden, wenn - wie in den Figuren 4 und 5 gezeigt - an der vorderen und der hinteren Stirnseite der äußeren Hülse 42 jeweils zwei Lagernasen 422 vorgesehen sind, welche das Wälzlager 40 zwischen sich halten beziehungsweise an welchen sich das Wälzlager 40 abstützt. Liegt die Verschwenkachse S in diesem Fall nicht in einer durch die jeweils zwei auf einer Seite der äußeren Hülse 42 liegenden Lagernasen 422, sondern zwischen den durch die Stirnflächen des Wälzlagers 40 gebildeten Ebenen, so findet eine Verschwenkung um die Lagernasen 422 gleichzeitig mit einem Verrutschen der Kontaktstelle zwischen dem Wälzlager 40 beziehungsweise dessen Außenring 400 und der jeweiligen Lagernase 422 statt. Liegt die Verschwenkachse S beispielsweise genau in der Mitte zwischen den beiden Stirnseiten des Wälzlagers 40, so findet ein Verrutschen der jeweiligen Kontaktstellen zwischen Wälzlager 40 und den jeweiligen Lagernasen 422 auf der vorderen Stirnseite und auf der hinteren Stirnseite in entgegengesetzten Richtungen statt.

In dem gezeigten Ausführungsbeispiel ist weiterhin eine innere Hülse 44 vorgesehen, in welcher das Wälzlager 40 aufgenommen ist und welche im Wesentlichen konzentrisch in der äußeren Hülse 42 verschwenkbar aufgenommen ist. Die innere Hülse 44 wird an den Lagernasen 422 zur Anlage gebracht, derart, dass eine Verschwenkung auch der inneren Hülse 44 um die durch die Lagernasen 422 definierte Verschwenkachse S herum ermöglicht wird.

Zwischen der inneren Hülse 44 und dem Wälzlager 40 ist weiterhin ein Elastomerelement 46 vorgesehen, welches eine elastische Aufnahme des Wälzlagers 40 in der inneren Hülse 44 ermöglicht. Im gezeigten Ausführungsbeispiel ist das Elastomerelement 46 hülsenförmig ausgebildet und zwischen der inneren Hülse 44 und dem Wälzlager 40 angeordnet. Das Elastomerelement 46 kann mit dem Wälzlager 40 und/oder der inneren Hülse 44 verklebt sein oder durch Reibschluss verbunden sein. In einer bevorzugten Variante kann das Elastomerelement 46 auch auf das Wälzlager 40 oder in die innere Hülse 44 vulkanisiert sein. Das Wälzlager 40 wird durch das Elastomerelement 46 elastisch in der inneren Hülse 44 gehalten.

Entsprechend ist das Wälzlager 40 über das Elastomerelement 46 elastisch, schwingungsgedämpft und spielarm beziehungsweise spielfrei in der inneren Hülse 44 gehalten. Die innere Hülse 44 wiederum ist in der äußeren Hülse 42 gehalten, wobei eine axiale Verschiebbarkeit der inneren Hülse 44 und des darin gehaltenen Wälzlagers 40 durch die Lagernasen 422 verringert beziehungsweise verhindert wird. Entsprechend kann eine spielarme beziehungsweise spielfreie Lagerung des Lagers 40 in der äußeren Hülse 42 erreicht werden, wobei gleichzeitig eine Verschwenkbarkeit des Wälzlagers 40 um die Verschwenkachse S ermöglicht wird.

Ausnehmungen 440 im Randbereich der inneren Hülse 44 in einer Position, die um 90° gegenüber der durch die Verschwenkachse S und der Lagerachse 460 des Wälzlagers definierten Ebene verschwenkt ist, sind vorgesehen, um einen größeren Verschwenkbereich der inneren Hülse 44 ohne ein Blockieren zu ermöglichen, als es dies ohne die Ausnehmungen 440 möglich wäre. Insbesondere lässt sich so der Winkel, bei welchem die innere Hülse 44 an der äußeren Hülse 42 anstößt, vergrößern, so dass entweder eine kompaktere Vorrichtung 4 mit einem reduzierten Außendurchmesser oder eine Vorrichtung 4 mit einem größeren Verschwenkwinkel α erreicht werden kann, wobei jeweils die Verschwenkelemente 420 die Verschwenkachse S definieren.

Das Wälzlager 40 kann entsprechend ein herkömmliches Industriewälzlager sein, welches über die Aufnahme in der äußeren Hülse 42 und das Halten mittels der Lagernasen 422 in der äußeren Hülse 42 um eine definierte Verschwenkachse S herum verschwenkbar gehalten wird. Eine Axialverschiebung hingegen wird durch die Lagernasen 422 im Wesentlichen verhindert.

In einer hier nicht gezeigten Ausführungsform kann das Wälzlager 40 auch direkt in der Außenhülse 42 aufgenommen sein, wobei zwischen dem Wälzlager 40 und der Außenhülse 42 dann beispielsweise eine Elastomerschicht beziehungsweise ein aufvulkanisiertes Elastomerelement vorgesehen sein kann. Entsprechend wird das Wälzlager 40 dann in der Außenhülse 42 über das Elastomermaterial gehalten. Eine Verschwenkbarkeit um eine einzige definierte Verschwenkachse S herum wird über Lagernasen 422 erreicht, welche gleichzeitig auch eine Axialverschiebung des Wälzlagers 40 verhindern.

Zur Montage der Lagervorrichtung 4 können die Lagernasen 422 zunächst in einem ausgeschwenkten Zustand, im Wesentlichen parallel zur Lagerachse 460 des Wälzlagers 40, vorgesehen sein und werden nach Einsetzen der Wälzlagers 40 und etwaiger weiterer Komponenten, wie beispielsweise der Innenhülse 44 und des Elastomerelements 46, so nach innen gebogen, dass eine im Wesentlichen spielfreie Aufnahme des Wälzlagers 40 in der äußeren Hülse 42 und ein in Axialrichtung verschiebungsfreies Aufnehmen erreicht wird, gleichzeitig aber eine definierte Verschwenkbarkeit um die durch die Lagernasen 422 bereitgestellte Verschwenkachse S herum erreicht wird.

Die Lagervorrichtung 4 kann dann in der gezeigten Ausführungsvariante so in ein Gehäuse 3 einer Vorrichtung zum Aufbringen einer Hilfskraftunterstützung eingesetzt werden, so wie es in Figur 2 angedeutet ist.

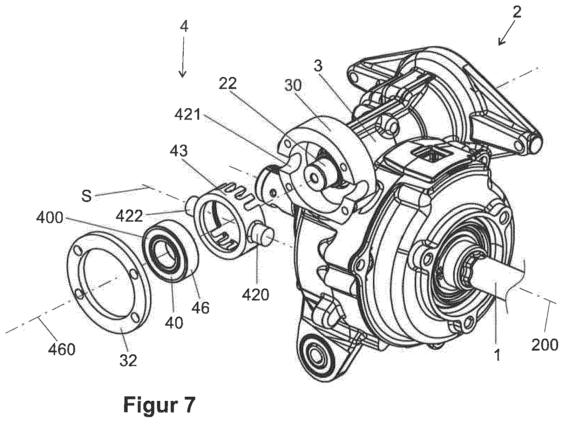

In Figur 7 ist eine schematische perspektivische Darstellung einer weiteren Vorrichtung 2 gezeigt, wobei hier das Gehäuse 3 in einem geschlossenen Zustand zu erkennen ist. In dem Gehäuse 3 sind bereits das Schneckenrad und die Antriebsschnecke 22 aufgenommen. Ein Gehäuseabschnitt 30 umfasst Ausnehmungen 421, wobei diese radial in einer Ebene angeordnet sind. Die Lagervorrichtung 4 umfasst eine Hülse 43, in welche das Wälzlager 40 und das Elastomerelement 46 eingesetzt wird. Eine axiale Verschiebbarkeit des Wälzlagers 40 in der Hülse 43 kann durch eine formschlüssige und/oder reibschlüssige axiale Lagersicherung, wie hinreichend aus dem Stand der Technik bekannt, verhindert werden.

Die Hülse 43 weist Verschwenkelemente 420 auf, die in die Ausnehmungen 421 des Gehäuseabschnittes 30 einsetzbar sind und somit eine Verschwenkachse S definieren, um welche herum die Hülse 43 und das Wälzlager 40 verschwenkbar sind.

In der vorliegenden Ausführungsform sind die Verschwenkelemente 420 in Form von Lagernasen 422 ausgebildet, welche einander radial gegenüberliegend an der Hülse 43 angeordnet sind und welche sich bezüglich der Hülse 43 radial nach außen hin erstrecken.

Die Verschwenkelemente 420 liegen bevorzugt in einer Ebene, welche sich parallel zu der Rotationsachse 200 des Schneckenrads 20 erstreckt, um eine definierte Verschwenkung der Antriebsschnecke 22 zum Winkelausgleich zu ermöglichen, beispielsweise beim Auftreten hoher Radialkräfte, und gleichzeitig eine Hysterese durch ein Hin- und Herschwingen in eine Richtung senkrecht zu dieser Verschwenkrichtung zu verhindern.

In einer hier nicht gezeigten Ausführungsform kann das Wälzlager 40 auch direkt in der Hülse 43 aufgenommen sein. In einer dabei vorteilhaften Ausführung ist die Hülse 43 aus einem nicht metallischen Werkstoff, vorzugweise Kunststoff, beschaffen, um Dämpfungseigenschaften ähnlich dem zuvor beschriebene Elastomerelement zu erreichen.
Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Lenkwelle
- 10: Eingangswelle
- 12: Ausgangswelle
- 100: Kraftfahrzeuglenkung
- 102: Lenkrad
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 118: Drehmomentsensor
- 118': Drehmomentsensor
- 120: kardanisches Gelenk
- 2: Vorrichtung zum Aufbringen einer Hilfskraft
- 20: Schneckenrad
- 22: Antriebsschnecke
- 24: Elektromotor
- 26: Wälzlager der Abtriebswelle des Elektromotors
- 28: Wälzlager für die Antriebsschnecke
- 200: Rotationsachse des Schneckenrads
- 220: Achse der Antriebsschnecke
- 240: Abtrieb des Elektromotors
- 3: Gehäuse
- 30: Gehäusebereich
- 32: Deckel
- 4: Lagervorrichtung
- 40: Wälzlager
- 42: äußere Hülse
- 43: Hülse
- 44: innere Hülse
- 46: Elastomerelement
- 400: Außenring
- 402: Innenring
- 420: Verschwenkelement
- 421: Ausnehmung
- 422: Lagernase
- 440: Ausnehmung
- 460: Lagerachse des Wälzlagers

- S: Verschwenkachse
- B: Breite der äußeren Hülse
- b: Breite des Wälzlagers
- α: Verschwenkwinkel

## Patentansprüche

1. Vorrichtung (2) zum Aufbringen einer Hilfskraft in einer Kraftfahrzeuglenkung, umfassend eine mit einem Elektromotor (24) verbindbare Antriebsschnecke (22), die auf ein Schneckenrad (20) zum Aufbringen einer Hilfskraft in die Kraftfahrzeuglenkung wirkt, wobei die Antriebsschnecke (22) in mindestens einem Lager (40) drehbar um eine Lagerachse (460) gelagert ist, wobei das Lager (40) um eine Verschwenkachse (S), die durch mindestens ein außerhalb des Lagers (40) angeordnetes Verschwenkelement (420) definiert ist, verschwenkbar ist,
und wobei die durch das mindestens eine Verschwenkelement (420) ausgebildete Verschwenkachse (S) im Wesentlichen parallel zu der Rotationsachse (200) des Schneckenrades (20) angeordnet ist,
**dadurch gekennzeichnet,**
**dass** eine in ein Gehäuse (3) eingesetzte Lagervorrichtung (4) eine äußere Hülse (42) umfasst, wobei das Lager (40) in der äußeren Hülse (42, 43) aufgenommen ist, welche zwei einander gegenüberliegend angeordnete und sich radial nach innen oder aussen erstreckende Lagernasen (422) zur Ausbildung des Verschwenkelements (420) aufweist.

2. Vorrichtung (2) gemäß Anspruch 1, **dadurch gekennzeichnet, dass** die Lagernasen (422) das Lager (40) an dessen Außenring (400) abstützen.

3. Vorrichtung (2) gemäß Anspruch 1 oder 2, **dadurch gekennzeichnet, dass** zwei Lagernasen (422) an einer der Antriebsschnecke (22) zugewendeten Stirnseite der äußeren Hülse (42), und zwei Lagernasen (422) an einer der Antriebsschnecke (22) abgewandten Stirnseite der äußeren Hülse (42) angeordnet sind.

4. Vorrichtung (2) gemäß einem der Ansprüche 1 bis 3, **dadurch gekennzeichnet, dass** vier in einer Ebene liegende Lagernasen (422) das Lager (40) abstützen.

5. Vorrichtung (2) gemäß einem der Ansprüche 1 bis 4, **dadurch gekennzeichnet, dass** zwischen der äußeren Hülse (42, 43) und dem Lager (40) konzentrisch eine innere Hülse (44) angeordnet ist, in welche das Lager (40) eingesetzt ist, und welche gegenüber der äußeren Hülse (42, 43) verschwenkbar durch das mindestens eine Verschwenkelement (420) abgestützt ist.

6. Vorrichtung (2) gemäß einem der Ansprüche 1 bis 5, **dadurch gekennzeichnet, dass** zwischen dem Lager (40) und der äußeren Hülse (42, 43) ein Elastomerelement (46) angeordnet ist oder ein Elastomerelement (46) auf das Lager (40) und/oder in die äußere Hülle (42) vulkanisiert ist.

7. Vorrichtung (2) gemäß einem der Ansprüche 1 bis 6, **dadurch gekennzeichnet, dass** die äußere Hülse (42, 43) in Axialrichtung eine Breite (B) aufweist, welche größer ist, als Breite (b) des Außenringes (400) des Lagers (40) in Axialrichtung.

## Claims

1. Device (2) for applying an auxiliary force in a motor vehicle steering system, comprising a driving worm (22) which can be connected to an electric motor (24) and which acts on a worm wheel (20) for applying an auxiliary force into the motor vehicle steering system, wherein the driving worm (22) is mounted in at least one bearing (40) so as to be rotatable about a bearing axis (460), wherein the bearing (40) is pivotable about a pivot axis (S) which is defined by at least one pivoting element (420) arranged outside the bearing (40),
and wherein the pivot axis (S) formed by the at least one pivoting element (420) is arranged substantially parallel to the axis of rotation (200) of the worm wheel (20),
**characterized**
**in that** a bearing device (4) inserted into a housing (3) comprises an outer sleeve (42), wherein the bearing (40) is received in the outer sleeve (42, 43), which comprises two mutually oppositely arranged and radially inwardly or outwardly extending bearing lugs (422) to form the pivoting element (420) .

2. Device (2) according to Claim 1, **characterized in that** the bearing lugs (422) support the bearing (40) on its outer ring (400).

3. Device (2) according to Claim 1 or 2, **characterized in that** two bearing lugs (422) are arranged on an end side of the outer sleeve (42) that faces the driving worm (22), and two bearing lugs (422) are arranged on an end side of the outer sleeve (42) that faces away from the driving worm (22).

4. Device (2) according to one of Claims 1 to 3,
**characterized in that** four bearing lugs (422) situated in one plane support the bearing (40).

5. Device (2) according to one of Claims 1 to 4,
**characterized in that** an inner sleeve (44), into which the bearing (40) is inserted, is arranged concentrically between the outer sleeve (42, 43) and the bearing (40) and is pivotably supported with respect to the outer sleeve (42, 43) by the at least one pivoting element (420).

6. Device (2) according to one of Claims 1 to 5,
**characterized in that** an elastomer element (46) is aranged between the bearing (40) and the outer sleeve (42, 43), or an elastomer element (46) is vulcanized onto the bearing (40) and/or into the outer sleeve (42).

7. Device (2) according to one of Claims 1 to 6,
**characterized in that** the outer sleeve (42, 43) has a width (B) in the axial direction that is greater than the width (b) of the outer ring (400) of the bearing (40) in the axial direction.

## Revendications

1. Dispositif (2) pour appliquer une force auxiliaire dans une direction de véhicule automobile, comprenant une vis sans fin d'entraînement (22) pouvant être reliée à un moteur électrique (24), laquelle agit sur une roue hélicoïdale (20) en vue d'appliquer une force auxiliaire dans la direction de véhicule automobile, la vis sans fin d'entraînement (22) étant montée dans au moins un palier (40) à rotation autour d'un axe de palier (460), le palier (40) pouvant pivoter autour d'un axe de pivotement (S) qui est défini par au moins un élément de pivotement (420) disposé à l'extérieur du palier (40),
et l'axe de pivotement (S) formé par l'au moins un élément de pivotement (420) étant disposé sensiblement en parallèle à l'axe de rotation (200) de la roue hélicoïdale (20),
**caractérisé en ce**
**qu'**un dispositif palier (4) introduit dans un boîtier (3) comporte une douille extérieure (42), le palier (40) étant accueilli dans la douille extérieure (42, 43), laquelle possède deux tenons de palier (422) disposés en vis-à-vis l'un de l'autre et s'étendant dans le sens radial vers l'intérieur ou l'extérieur en vue de former l'élément de pivotement (420).

2. Dispositif (2) selon la revendication 1,
**caractérisé en ce que** les tenons de palier (422) soutiennent le palier (40) au niveau de sa bague extérieure (400).

3. Dispositif (2) selon la revendication 1 ou 2,
**caractérisé en ce que** deux tenons de palier (422) sont disposés au niveau d'un côté frontal de la douille extérieure (42) qui fait face à la vis sans fin d'entraînement (22), et deux tenons de palier (422) sont disposés au niveau d'un côté frontal de la douille extérieure (42) qui est à l'opposé de la vis sans fin d'entraînement (22).

4. Dispositif (2) selon l'une des revendications 1 à 3, **caractérisé en ce que** quatre tenons de palier (422) qui se trouvent dans un plan supportent le palier (40).

5. Dispositif (2) selon l'une des revendications 1 à 4, **caractérisé en ce qu'**entre la douille extérieure (42, 43) et le palier (40) est disposée de manière concentrique une douille intérieure (44), dans laquelle est introduit le palier (40) et laquelle est soutenue de manière pivotante par rapport à la douille extérieure (42, 43) par l'au moins un élément de pivotement (420).

6. Dispositif (2) selon l'une des revendications 1 à 5, **caractérisé en ce qu'**un élément élastomère (46) est disposé entre le palier (40) et la douille extérieure (42, 43) ou un élément élastomère (46) est vulcanisé sur le palier (40) et/ou dans la douille extérieure (42).

7. Dispositif (2) selon l'une des revendications 1 à 6, **caractérisé en ce que** la douille extérieure (42, 43) présente, dans la direction axiale, une largeur (B) qui est supérieure à la largeur (b) de la bague extérieure (400) du palier (40) dans la direction axiale.
